# EUROPEAN PATENT SPECIFICATION

(11) **EP 3 043 332 B1**
(45) Date of publication and mention of the grant of the patent: **03.05.2023**
(21) Application number: 14843132.3
(22) Date of filing: 11.08.2014
(51) Int. Cl.: G08G 5/02, B64D 45/04, B64F 1/36, G08G 5/00

(54) **AIRCRAFT FLIGHT INFORMATION GENERATION DEVICE, AIRCRAFT FLIGHT INFORMATION GENERATION METHOD, AND AIRCRAFT FLIGHT INFORMATION GENERATION PROGRAM**
VORRICHTUNG ZUR FLUGINFORMATIONSGENERIERUNG FÜR FLUGZEUGE, VERFAHREN ZUR FLUGINFORMATIONSGENERIERUNG FÜR FLUGZEUGE UND PROGRAMM ZUR FLUGINFORMATIONSGENERIERUNG FÜR FLUGZEUGE
DISPOSITIF DE GÉNÉRATION D'INFORMATIONS DE VOL D'AÉRONEF, PROCÉDÉ DE GÉNÉRATION D'INFORMATIONS DE VOL D'AÉRONEF ET PROGRAMME DE GÉNÉRATION D'INFORMATIONS DE VOL D'AÉRONEF

(30) Priority: 06.09.2013 JP 2013184674
(43) Date of publication of application: 13.07.2016
(73) Proprietor: Japan Aerospace Exploration Agency, Tokyo 182-8522 (JP)
(72) Inventor: MATAYOSHI Naoki, Chofu-shi Tokyo 182-8522 (JP); IIJIMA Tomoko, Chofu-shi Tokyo 182-8522 (JP)
(74) Representative: dompatent von Kreisler Selting Werner - Partnerschaft von Patent- und Rechtsanwälten mbB
(86) International application number: PCT/JP2014/071148
(87) International publication number: WO 2015/033742

(56) References cited:
- EP-A1- 0 229 197
- EP-A2- 1 916 503
- JP-A- H11 231 067
- JP-A- H11 258 358
- US-A- 4 043 194
- US-A1- 2012 173 191
- US-B1- 8 055 395

## Description

### [Technical Field]

The present invention relates to an aircraft flight information generation device, an aircraft flight information generation method, and an aircraft flight information generation program each for generating aircraft flight information used in aircraft flight.

### [Background Art]

A wind disturbance on a landing path for an aircraft fluctuates the flight path and flight attitude of the aircraft irrespective of the intension of a pilot, and hence it becomes a factor responsible for flight interferences such as a go-around and an alternative landing and an accident such as a hard landing. A large-scale wind disturbance (windshear) having a change scale of the order of 1 to 10 km fluctuates the flight path mainly, and a small-scale wind disturbance (turbulence) having a change scale of the order of 10 to 100 m fluctuates the flight attitude mainly. International Civil Aviation Organization (ICAO) requests provision of wind disturbance information to the aircraft for the landing path below an altitude of 500 m from the surface of a runway (see NPL 1).

A wind direction or a wind speed on the landing path can be observed with a spatial resolution of the order of 100 m using a wind observation sensor such as a radar or a lidar (laser radar) that is installed on the ground or mounted on the aircraft. Devices are developed, which detect the wind disturbance that can be the factor responsible for the flight interference and the accident by using the wind observation information and provide warning information to the pilot (see PTLs 1 to 4 and NPL 2).

### [Citation List]

### [Patent Literature]

PTL 1: Japanese Examined Patent Publication No. H8-509061
PTL 2: Japanese Patent Application Laid-open No. 2012-218731
PTL 3: Japanese Patent Application Laid-open No. 2002-267753
PTL 4: Japanese Patent Application Laid-open No. 2012-103050
EP 1 916 503 A2 discloses a method and system for context sensitive navigation of an aircraft. The method comprises obtaining data for use at takeoff, enroute, or at a destination, and interpreting the data to infer conditions during takeoff, enroute, or at the destination. One or more viable flight plans are determined based on the conditions during takeoff, enroute, or at the destination. The one or more viable flight plans are then presented to a pilot for optional selection. When there is more than one viable flight plan, a prioritized selectable list of flight plans is presented to the pilot.

US 2012/0173191 A1 relates to measuring airspeed and the velocity of air.

US 8 055 395 discloses estimating and using the crosswind fluctuations to estimate a landing difficulty level.

US 4 043 194 discloses measuring the headwind to estimate a landing difficulty level.

### [Non Patent Literature]

NPL 1: International Civil Aviation Organization (ICAO), Annex 3 "Meteorological Service for International Air Navigation"
NPL 2: Federal Aviation Administration (FAA), Technical Standard Order TSO-C117a' Airborne Windshear Warning and Escape Guidance Systems for Transport Airplanes'
NPL 3: Kitaki, Matayoshi, Suzuki, Uemura, "Wind Vector Estimation of a Flying Airplane", JOURNAL OF THE JAPAN SOCIETY FOR AERONAUTICAL AND SPACE SCIENCES No. 524, September 1997

### [Summary of Invention]

### [Technical Problem]

In the conventional arts described above, the warning information is generated by a threshold value determination of the observed intensity of the wind disturbance on the landing path (the change rate or change amount of the wind speed), but a problem arises in that the correlation between the generated warning information and the actual occurrence of the flight interference and the accident is low.

To cope with this, a principal object of the present invention is to solve the conventional problem and provide an aircraft flight information generation device, an aircraft flight information generation method, and an aircraft flight information generation program that generate information highly correlated with the actual occurrence of the flight interference and the accident.

### [Solution to Problem]

In order to solve the above-mentioned problem, according to the present invention, an aircraft flight information generation device, an aircraft flight information generation method and an aircraft flight information generation program according to the independent claims are suggested. Further preferred embodiments of the present invention are defined in the dependent claims.

The present invention consists in an aircraft flight information generation device according to claim 1. According to an embodiment, the first estimation model is constructed by using the flight data of the aircraft of an estimation target model as the learning data.

According to an embodiment, the data processing unit has a wind disturbance estimation unit, the wind disturbance estimation unit estimates a fluctuation range of a head wind component, a fluctuation range of a cross wind component, and a fluctuation range of a vertical wind component of wind speeds at the plurality of predetermined altitudes with a second estimation model by using data acquired by performing the preprocessing on the data on wind directions and the data on wind speeds at the plurality of predetermined altitudes on the landing path acquired by the weather sensor and the data on bearing of the runway, as the input information, and the second estimation model is constructed by the nonlinear multivariate analysis method by using the flight data of the aircraft, which has flown on the landing path as the estimation target and landed, as the learning data.

According to another embodiment, the second estimation model is constructed by using a moving average value of time history information on the head wind component, the cross wind component, and the vertical wind component of the wind speed that the aircraft has received, calculated based on the flight data of the aircraft, as an input value of the learning data.

According to another embodiment, the second estimation model is constructed by using a standard deviation around the moving average value of the time history information on the head wind component, the cross wind component, and the vertical wind component of the wind speed that the aircraft has received, calculated based on the flight data of the aircraft, as an output value of the learning data.

According to another embodiment, the wind disturbance estimation unit calculates the head wind components of the wind speed and the cross wind components of the wind speed at the plurality of predetermined altitudes by performing coordinate transformation by using the data on wind directions and the data on wind speeds at the plurality of predetermined altitudes on the landing path acquired by the weather sensor and the data on bearing of the runway as the input information, calculates an altitude change rate of the head wind component and an altitude change rate of the cross wind component at the plurality of predetermined altitudes by performing numerical differentiation on each head wind component and each cross wind component in an altitude direction, and estimates the fluctuation range of the head wind component, the fluctuation range of the cross wind component, and the fluctuation range of the vertical wind component of the wind speed with the second estimation model by using the head wind component, the cross wind component, the altitude change rate of the head wind component, the altitude change rate of the cross wind component, and an altitude.

According to another embodiment, the third estimation model is constructed by using the standard deviation around the moving average value of fluctuation data of the aircraft, included in the flight data of the aircraft, as the output value of the learning data.

According to another embodiment, the third estimation model is constructed by using the past flight data of the aircraft of the estimation target model, as the learning data.

A second aspect of the present invention is an aircraft flight information generation method according to claim 9. data on wind speeds at the plurality of predetermined altitudes on the landing path acquired by the weather sensor

A third aspect of the present invention is an aircraft flight information generation program for providing an estimation of a landing difficulty level used in aircraft according to claim 10.

### [Advantageous Effects of Invention]

According to the first second and third aspects of the present invention, it is possible to estimate the landing difficulty level reflecting the information on a specific runway by estimating the aircraft landing difficulty level at the runway by using the data on winds and the data on wind speeds at the plurality of predetermined altitudes on the landing path acquired by the weather sensor, the data on bearing of the runway, and the information on the model of the aircraft, as the input information, and hence it is possible to provide the estimation of landing difficulty level that is highly correlated with occurrence of a flight interference and an accident and that is highly usable.

According to the present invention, the aircraft flight information generation device includes the data processing unit that performs the preprocessing on the data on wind directions and the data on wind speeds at the plurality of predetermined altitudes on the landing path acquired by the weather sensor and the data on bearing of the runway, and the landing difficulty level estimation unit that estimates the landing difficulty level with the first estimation model by using output data of the data processing unit and the information on the model of the aircraft, as the input information, and the first estimation model is constructed by the nonlinear multivariate analysis method by using the flight data of the aircraft that has flown on the landing path as the estimation target and landed and the evaluation data obtained by the subjective evaluation relative to the landing difficulty level by the pilot as the learning data, whereby it is possible to estimate the landing difficulty level that is highly usable and reflects the specific landing path and the evaluation data obtained by the subjective evaluation by the pilot.

According to the present invention, the first estimation model is constructed by using the flight data of the aircraft of the estimation target model as the learning data, whereby it is possible to estimate the landing difficulty level that is highly usable and reflects the information on the model of the specific aircraft in addition to the specific landing path and the evaluation data obtained by the subjective evaluation by the pilot.

According to an embodiment , the data processing unit has the wind disturbance estimation unit, the wind disturbance estimation unit estimates the fluctuation range of the head wind component, the fluctuation range of the cross wind component, and the fluctuation range of the vertical wind component of the wind speed at the plurality of predetermined altitudes with the second estimation model by using the data acquired by performing the preprocessing on the data on wind directions and the data on wind speeds at the plurality of predetermined altitudes on the landing path acquired by the weather sensor and the data on bearing of the runway, as the input information, and the second estimation model is constructed by the nonlinear multivariate analysis method by using the flight data of the aircraft, which has flown on the landing path as the estimation target and landed, as the learning data, whereby it is possible to estimate the fluctuation range of the head wind component, the fluctuation range of the cross wind component, and the fluctuation range of the vertical wind component of the wind speed that are factors responsible for the fluctuation of the flight condition of the aircraft with high accuracy with information on the specific landing path reflected therein, and hence it is possible to estimate the landing difficulty level that is highly usable.

According to an embodiment of the present invention, it is possible to construct the second estimation model having high accuracy that closely resembles the actual condition by using the moving average value of the time history information on the head wind component, the cross wind component, and the vertical wind component of the wind speed that the aircraft has received calculated based on the flight data of the aircraft as the input value of the learning data when the second estimation model is constructed, and hence it is possible to estimate the fluctuation range of each component of the wind speed having high accuracy.

According to an embodiment of the present invention, it is possible to construct the second estimation model having high accuracy that closely resembles the actual condition by using the standard deviation around the moving average value of the time history information on the head wind component, the cross wind component, and the vertical wind component of the wind speed that the aircraft has received calculated based on the flight data of the aircraft as the output value of the learning data when the second estimation model is constructed, and hence it is possible to estimate the fluctuation range of each component of the wind speed having high accuracy.

According to an embodiment of the present invention, the wind disturbance estimation unit calculates the head wind components of the wind speed and the cross wind components of the wind speed at the plurality of predetermined altitudes by performing the coordinate transformation by using the data on wind directions and the data on wind speeds at the plurality of predetermined altitudes on the landing path acquired by the weather sensor and the data on bearing of the runway, as the input information, calculates the altitude change rate of the head wind component and the altitude change rate of the cross wind component by performing the numerical differentiation on each head wind component and each cross wind component in the altitude direction, and estimates the fluctuation range of the head wind component, the fluctuation range of the cross wind component, and the fluctuation range of the vertical wind component of the wind speed with the second estimation model by using the head wind component, the cross wind component, the altitude change rate of the head wind component, the altitude change rate of the cross wind component, and the altitude as the input information, whereby it is possible to estimate the fluctuation range of each component of the wind speed having high accuracy from the data on wind directions and the data on wind speeds at the plurality of altitudes on the landing path, and the data on bearing of the runway.

According to the first aspect of the present invention, the data processing unit has the aircraft response estimation unit, the aircraft response estimation unit estimates the fluctuation range of the flight condition of the aircraft with the third estimation model by using the head wind components and the cross wind components on the landing path at the plurality of predetermined altitudes, and the fluctuation range of the head wind component, the fluctuation range of the cross wind component, and the fluctuation range of the vertical wind component at the plurality of predetermined altitudes as the input information, and the third estimation model is constructed by the nonlinear multivariate analysis method by using the flight data of the aircraft, which has flown on the landing path as the estimation target and landed, as the learning data, whereby it is possible to estimate the fluctuation range of the flight condition of the aircraft that is an important element in the estimation of the landing difficulty level with high accuracy with the information on the specific landing path reflected therein, and hence it is possible to estimate the landing difficulty level that is highly usable.

According to an embodiment of the present invention, it is possible to construct the third estimation model having high accuracy that closely resembles the actual condition by using the standard deviation around the moving average value of the fluctuation data of the aircraft, included in the flight data of the aircraft, as the output value of the learning data when the third estimation model is constructed, and hence it is possible to estimate the fluctuation range of the flight condition of the aircraft having high accuracy.

According to an embodiment of the present invention, the third estimation model is constructed by using the flight data of the aircraft of the estimation target model as the learning data, whereby it is possible to estimate the fluctuation range of the flight condition of the aircraft that is highly usable and reflects the information on the model of the specific aircraft in addition to the specific landing path.

### [Brief Description of Drawings]

[Fig. 1]

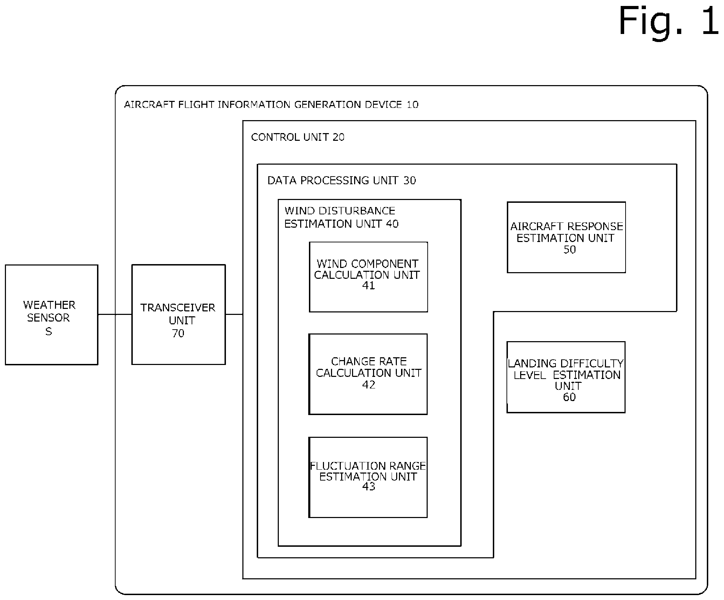

   Fig. 1 is a schematic view showing a configuration of an aircraft flight information generation device as an embodiment of the present invention.
[Fig. 2]

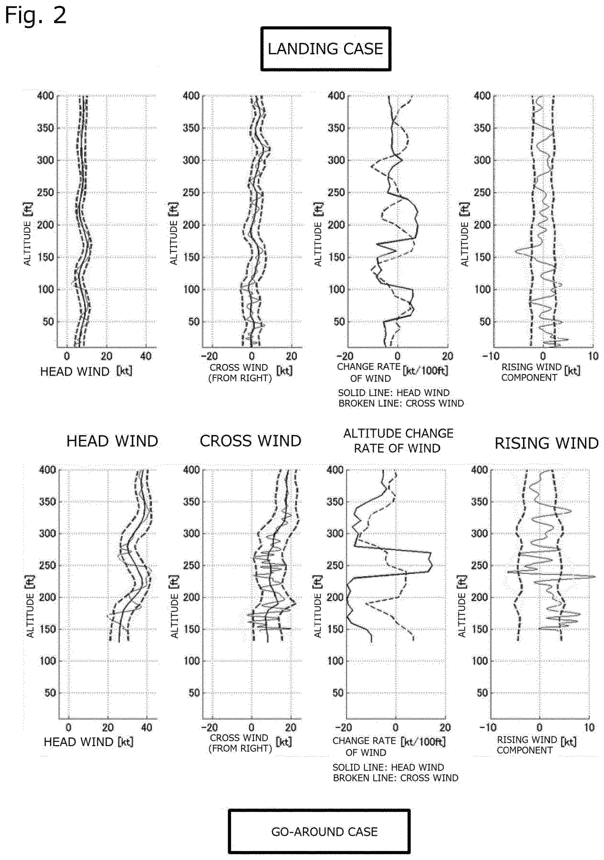

   Fig. 2 is an explanatory view showing an example of the result of verification of an output by a wind disturbance estimation unit.
[Fig. 3]

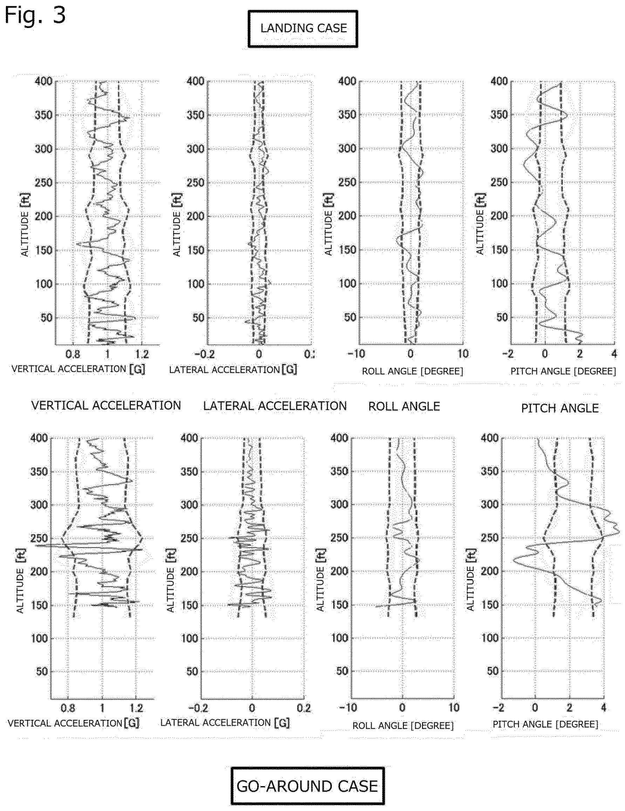

   Fig. 3 is an explanatory view showing an example of the result of verification of an output by an aircraft response estimation unit.
[Fig. 4]

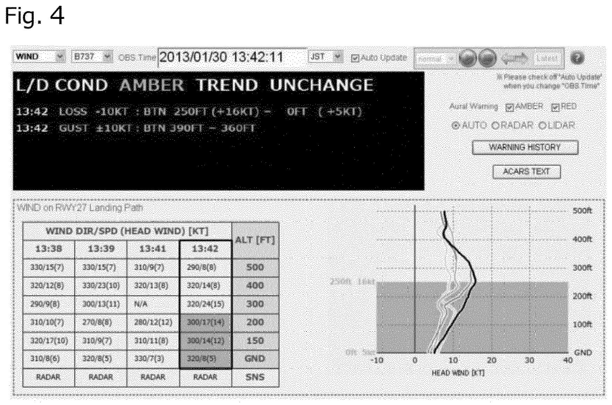

   Fig. 4 is a reference diagram showing an example of a warning screen generated based on information generated by the aircraft flight information generation device.

### [Reference Signs List]

- 10: aircraft flight information generation device
- 20: control unit
- 30: data processing unit
- 40: wind disturbance estimation unit
- 41: wind component calculation unit
- 42: change rate calculation unit
- 43: fluctuation range estimation unit
- 50: aircraft response estimation unit
- 60: landing difficulty level estimation unit
- 70: transceiver unit
- S: weather sensor

### [Description of Embodiments]

The present invention relates to an aircraft flight information generation device for generating aircraft flight information used in aircraft flight and, as long as the aircraft flight information generation device estimates an aircraft landing difficulty level at a runway by using data on wind directions and data on wind speeds at a plurality of predetermined altitudes on a landing path acquired by a weather sensor, data on bearing of the runway, and information on the model of the aircraft, as input information, and generates information highly correlated with the actual occurrence of a flight interference and an accident, its specific configuration may be any configuration.

For example, the specific implementation of the weather sensor in the present invention may be any sensor such as a weather radar or a weather lidar as long as the sensor is capable of acquiring wind information.

Hereinbelow, an aircraft flight information generation device 10 as an embodiment of the present invention will be described based on Figs. 1 to 4.

The aircraft flight information generation device 10 performs data processing on observation information acquired by a weather sensor S to generate information for assisting various decisions in aircraft flight. The aircraft flight information generation device 10 includes a control unit 20, a transceiver unit 70 that transmits/receives information to/from the weather sensor S, a storage unit, an input unit, an output unit, and an auxiliary storage device, and implements individual units described later by causing the control unit 20 to operate according to software expanded in the storage unit. The control unit 20 is constituted by a CPU and the like, and the storage unit is constituted by a ROM, a RAM, and the like.

As shown in Fig. 1, the control unit 20 has a data processing unit 30 that includes a wind disturbance estimation unit 40 and an aircraft response estimation unit 50, and a landing difficulty level estimation unit 60 that calculates a landing difficulty level for an aircraft.

First, the wind disturbance estimation unit 40 included in the data processing unit 30 will be described. As shown in Fig. 1, the wind disturbance estimation unit 40 has a wind component calculation unit 41, a change rate calculation unit 42, and a fluctuation range estimation unit 43. The content of processing by individual units of the wind disturbance estimation unit 40 is as follows.

First, the wind component calculation unit 41 calculates head wind components of a wind speed along a runway direction and cross wind components of a wind speed along a lateral direction orthogonal to the runway direction at a plurality of predetermined altitudes by performing coordinate transformation by using data on wind directions and data on wind speeds at the plurality of predetermined altitudes on a landing path acquired by the weather sensor S and data on bearing of the runway, as input information.

Next, the change rate calculation unit 42 calculates the altitude change rate of the head wind component and the altitude change rate of the cross wind component by performing numerical differentiation on each head wind component and each cross wind component acquired by the wind component calculation unit 41 in an altitude direction.

Next, the fluctuation range estimation unit 43 estimates the fluctuation range of the head wind component, the fluctuation range of the cross wind component, and the fluctuation range of a vertical wind component on the landing path at the same altitude as the altitude of an input with a second estimation model by using the head wind component, the cross wind component, the altitude change rate of the head wind component, the altitude change rate of the cross wind component, and the altitude as the input information. In the fluctuation range estimation unit 43, since one of main factors responsible for the generation of a relatively small-scale wind speed fluctuation having a change scale of the order of 10 to 100 m is an altitude change of the wind speed (shear), the altitude change rates of the head wind component and the cross wind component are used as the input information.

The above second estimation model is generated by a nonlinear multivariate analysis method such as neural network, Bayesian network, or support vector machine based on flight data of the aircraft that has flown on the landing path as an estimation target and landed. The specific content of the second estimation model is as follows.

First, the fluctuation range of the wind speed component as the output of the second estimation model is used as the input of the aircraft response estimation unit 50, and hence information on the wind disturbance having a change scale of the order of 10 to 100 m that fluctuates a flight attitude needs to be included. However, with a typical wind observation sensor having a spatial resolution of the order of 100 m, it is not possible to directly observe the information. Accordingly, learning data used in the construction of the second estimation model is generated by the following method.

The learning data is generated based on the flight data of the aircraft that has flown on the landing path as the estimation target and landed. It is desirable to prepare as many examples of the flight data as possible such as 100 examples or more. As the flight data, for example, data of a flight data recorder (FDR) mounted in typical passenger planes can be used. Typical airlines keep the data of the FDR in about the past one year, and it is easy to secure the number of data items. Time history information on the wind having three components of the head wind · the cross wind · the vertical wind that the aircraft has received (hereinafter referred to as flight data calculation wind) can be calculated from the flight data (see NPL 3). The flight data of the aircraft is usually recorded at a rate of about 1 to 10 Hz and, when consideration is given to the fact that the ground speed during a normal landing is about 60 m/s, the spatial resolution of the wind information based on the flight data recorded at the rate of, e.g., 2 Hz is about 30 m, and wind data on the three components calculated from the flight data sufficiently includes the information on the small-scale wind disturbance (the change scale of the order of 10 to 100 m) that fluctuates the flight attitude. In the learning data, the input of the estimation model corresponding to the output of the existing wind observation sensor such as the radar or the lidar is generated by performing a moving average on the flight data calculation wind with an interval (example: about 2 to 3 seconds in the case of the spatial resolution of 100 to 200 m) that matches the spatial resolution of the wind observation sensor (the order of 100 m). In the learning data, each of the wind fluctuation ranges of the three components of the head wind, the cross wind, and the vertical wind serving as the output of the estimation model is calculated as a standard deviation around the moving average value of the flight data calculation wind. The moving average for the calculation of the standard deviation is performed with an interval (example: about 2 to 5 seconds in the case of a normal large passenger plane) that mainly represents the wind speed fluctuation by the wind disturbance (the change scale of the order of 10 to 100 m) that fluctuates the flight attitude.

Herein, the result of verification of the output by the wind disturbance estimation unit 40 will be described by using Fig. 2. From Fig. 2, it can be seen that the fluctuation range of each of the wind components (the head wind, the cross wind, the altitude change rate of the wind, a rising wind) is larger in a go-around case shown in the lower part of Fig. 2 than that in a go-around case shown in the upper part of Fig. 2. Note that, in Fig. 2, the output by the wind disturbance estimation unit 40 is indicated by a dotted line, and the flight data (FDR) is indicated by a solid line.

Next, the content of the processing of the aircraft response estimation unit 50 will be described hereinbelow.

The aircraft response estimation unit 50 estimates the fluctuation range of the flight condition (flight specification) of the aircraft at the same altitude as that of an input with a third estimation model set for each landing path and each model of the aircraft by using the head wind components and the cross wind components on the landing path at the plurality of altitudes acquired by the wind component calculation unit 41, the fluctuation range of the head wind component, the fluctuation range of the cross wind component, and the fluctuation range of the vertical wind component on the landing path at the plurality of altitudes acquired by the fluctuation range estimation unit 43, and information on the model of the aircraft, as the input information.

The above third estimation model is generated by the nonlinear multivariate analysis method such as neutral network, Bayesian network, or support vector machine based on the fight data of the aircraft of an estimation target model that has flown on the landing path as the estimation target and landed. The specific content of the third estimation model is as follows.

First, an air speed , an attitude (roll, pitch), vertical · lateral accelerations, a climb/descent rate, and a steering amount that are highly correlated with the difficulty level of piloting are appropriate as the flight specification serving as the estimation target of the third estimation model, but the flight specification is not limited thereto. In order to consider flight characteristics that differ depending on the model, the estimation model is constructed for each model. The fluctuation range of the flight specification as the output of the third estimation model is used as the input of the landing difficulty level estimation unit, and hence the estimation is performed such that fluctuation information of the flight specification in a frequency band highly correlated with the difficulty level of piloting is included. Accordingly, the leaning data used for the construction of the third estimation model is generated by the following method.

The leaning data is generated based on the flight data of the aircraft of the estimation target model that has flown on the landing path as the estimation target and landed. Herein, it is desirable to prepare as many examples of the flight data as possible such as 100 examples or more, and it is especially desirable to prepare the flight data involving the piloting by a large number of pilots in order to reflect piloting characteristics of the pilot averagely. In the leaning data, the wind data serving as the input of the estimation model is generated from the flight data by the same method as that of the output generation of the wind disturbance estimation unit 40. In the leaning data, the fluctuation range of the flight specification serving as the output of the estimation model is calculated as the standard deviation around the moving average value of the flight data corresponding to the flight specification as the estimation target (the flight data usually includes the record of the flight specification as the estimation target). The moving average for the calculation of the standard deviation is performed with the interval (example: about 2 to 4 seconds in the case of a normal large passenger plane) that mainly represents the fluctuation of the flight specification highly correlated with the difficulty level of piloting.

Herein, the result of verification of the output by the aircraft response estimation unit 50 will be described by using Fig. 3. From Fig. 3, it can be seen that the fluctuation range of each of the flight specifications (vertical acceleration, lateral acceleration, roll angle, pitch angle) is larger in a go-around case shown in the lower part of Fig. 3 than that in a landing case shown in the upper part of Fig. 3. In Fig. 3, the output by the aircraft response estimation unit 50 is indicated by the dotted line, and the flight data (FDR) is indicated by the solid line.

Next, the content of the processing of the landing difficulty level estimation unit 60 will be described hereinbelow.

The landing difficulty level estimation unit 60 calculates the landing difficulty level, which is divided into a plurality of classifications (example: three levels of low, middle, and high in the difficulty level), with a first estimation model set for each landing path and each model of the aircraft by using the information on the model of the aircraft and the fluctuation range of the flight condition of the aircraft at the plurality of predetermined altitudes acquired by the aircraft response estimation unit 50, as the input information.

The first estimation model is generated by the nonlinear multivariate analysis method such as neutral network, Bayesian network, or support vector machine based on the flight data of the aircraft of the estimation target model that has flown on the landing path as the estimation target and landed, and evaluation data obtained by subjective evaluation relative to the landing difficulty level by the pilot. The specific content of the first estimation model is as follows.

First, the learning data of the first estimation model is generated based on the flight data of the aircraft of the estimation target model that has flown on the landing path as the estimation target and landed, and the evaluation data obtained by the subjective evaluation relative to the landing difficulty level by the pilot. Herein, it is desirable to prepare as many examples of the flight data as possible such as 100 examples or more, and it is especially desirable to prepare the flight data involving the piloting by a large number of pilots in order to reflect piloting characteristics of the pilot averagely. In addition, it is also desirable to prepare as many examples of the evaluation data as possible such as 100 examples or more. Note that the subjective evaluation by the pilot is performed with the same classification as that of the output of the estimation model. In the learning data, the fluctuation range of the flight specification of the aircraft serving as the input of the estimation model is generated from the flight data by the same method as that of the output generation of the aircraft response estimation unit 50. In the learning data, subjective evaluation data of the pilot is used for the landing difficulty level serving as the output of the estimation model. The subjective evaluation data can be collected by, e.g., conducting a questionnaire survey of the pilot for a predetermined time period.

According to the aircraft flight information generation device 10 of the present embodiment obtained in this manner, it is possible to estimate the landing difficulty level reflecting the information on the specific runway by estimating the aircraft landing difficulty level at the runway by using the data on wind directions and the data on wind speeds at the plurality of predetermined altitudes on the landing path acquired by the weather sensor S, the data on bearing of the runway, and the information on the model of the aircraft, as the input information, and hence, as shown in Fig. 4, it is possible to provide the estimation of landing difficulty level highly correlated with the occurrence of the flight interference and the accident and highly usable.

Further, the aircraft flight information generation device 10 has the data processing unit 30 that performs preprocessing on the data on wind directions and the data on wind speeds at the plurality of predetermined altitudes on the landing path acquired by the weather sensor S and the data on bearing of the runway, and the landing difficulty level estimation unit 60 that estimates the landing difficulty level with the first estimation model by using output data of the data processing unit 30 and information on the model of the aircraft, as the input information, and the first estimation model is constructed by the nonlinear multivariate analysis method by using the flight data of the aircraft that has flown on the landing path as the estimation target and landed, and the evaluation data obtained by the subjective evaluation relative to the landing difficulty level by the pilot as the leaning data, whereby it is possible to estimate the landing difficulty level that is highly usable and reflects the specific landing path and the evaluation data obtained by the subjective evaluation by the pilot.

In addition, the first estimation model is constructed by using the flight data of the aircraft of the estimation target model as the learning data, whereby it is possible to estimate the landing difficulty level that is highly usable and reflects the information on the model of the specific aircraft (flight characteristics) in addition to the specific landing path and the evaluation data obtained by the subjective evaluation by the pilot.

Further, the data processing unit 30 has the wind disturbance estimation unit 40, the wind disturbance estimation unit 40 estimates the fluctuation range of the head wind component, the fluctuation range of the cross wind component, and the fluctuation range of the vertical wind component of the wind speed at the plurality of predetermined altitudes with the second estimation model by using the data acquired by performing the preprocessing on the data on wind directions and the data on wind speeds at the plurality of predetermined altitudes on the landing path acquired by the weather sensor S and the data on bearing of the runway, as the input information, and the second estimation model is constructed by the nonlinear multivariate analysis method by using the flight data of the aircraft that has flown on the landing path as the estimation target and landed as the learning data, whereby it is possible to estimate the fluctuation range of the head wind component, the fluctuation range of the cross wind component, and the fluctuation range of the vertical wind component of the wind speed that are factors responsible for the fluctuation of the flight condition of the aircraft with high accuracy with the information on the specific landing path reflected therein, and hence it is possible to estimate the landing difficulty level that is highly usable.

In addition, it is possible to construct the second estimation model having high accuracy that closely resembles the actual condition by using the moving average value of the time history information on the head wind component, the cross wind component, and the vertical wind component of the wind speed that the aircraft has received calculated based on the flight data of the aircraft as the input value of the learning data when the second estimation model is constructed, and hence it is possible to estimate the fluctuation range of each component of the wind speed having high accuracy.

Further, it is possible to construct the second estimation model having high accuracy that closely resembles the actual condition by using the standard deviation around the moving average value of the time history information on the head wind component, the cross wind component, and the vertical wind component of the wind speed that the aircraft has received calculated based on the flight data of the aircraft as the output value of the learning data when the second estimation model is constructed, and hence it is possible to estimate the fluctuation range of each component of the wind speed having high accuracy.

In addition, the wind disturbance estimation unit 40 calculates the head wind components of the wind speed and the cross wind components of the wind speed at the plurality of predetermined altitudes by performing the coordinate transformation by using the data on wind directions and the data on wind speeds at the plurality of predetermined altitudes on the landing path acquired by the weather sensor S and the data on bearing of the runway as the input information, calculates the altitude change rate of the head wind component and the altitude change rate of the cross wind component by performing the numerical differentiation on each head wind component and each cross wind component in the altitude direction, and estimates the fluctuation range of the head wind component, the fluctuation range of the cross wind component, and the fluctuation range of the vertical wind component of the wind speed with the second estimation model by using the head wind component, the cross wind component, the altitude change rate of the head wind component, the altitude change rate of the cross wind component, and the altitude as the input information, whereby it is possible to estimate the fluctuation range of each component of the wind speed having high accuracy from the data on wind directions and the data on wind speeds at the plurality of predetermined altitudes on the landing path and the data on bearing of the runway.

Further, the data processing unit 30 has the aircraft response estimation unit 50, the aircraft response estimation unit 50 estimates the fluctuation range of the flight condition of the aircraft with the third estimation model by using the head wind components and the cross wind components on the landing path at the plurality of predetermined altitudes, and the fluctuation range of the head wind component, the fluctuation range of the cross wind component, and the fluctuation range of the vertical wind component at the plurality of predetermined altitude as the input information, and the third estimation model is constructed by the nonlinear multivariate analysis method by using the flight data of the aircraft that has flown on the landing path as the estimation target and landed as the learning data, whereby it is possible to estimate the fluctuation range of the flight condition of the aircraft that is an important element in the estimation of the landing difficulty level with high accuracy with the information on the specific landing path reflected therein without using flight characteristic information of the aircraft that is usually non-public information of an aircraft manufacturer, and hence it is possible to estimate the landing difficulty level which is highly usable.

In addition, it is possible to construct the third estimation model having high accuracy that closely resembles the actual condition by using the standard deviation around the moving average value of the fluctuation data of the aircraft, included in the flight data of the aircraft, as the output value of the learning data when the third estimation model is constructed, and hence it is possible to estimate the fluctuation range of the flight condition of the aircraft having high accuracy.

Further, the third estimation model is constructed by using the flight data of the aircraft of the estimation target model as the learning data, whereby it is possible to estimate the fluctuation range of the flight condition of the aircraft that is highly usable and reflects the information on the model of the specific aircraft (flight characteristics) in addition to the specific landing path.

In addition, each airline imposes various wind restrictions (a restriction on the maximum value of the cross wind component or the like) on the landing of the aircraft in order to secure safety. In the present embodiment, it is possible to estimate the fluctuation range of the flight specification of the aircraft and the landing difficulty level for the input of various simulated wind patterns. It becomes possible to examine correctness of conventional wind restrictions and relaxation of the restriction by checking the estimated fluctuation range of the flight specification against the allowable value of the fluctuation range set by each airline or evaluating the estimated difficulty level. When the wind restriction can be relaxed, it becomes possible to execute the landing on more occasions than in a conventional case, and the efficiency of the aircraft flight is increased.

Further, in the present embodiment, by inputting the wind data calculated from the flight data when a case occurs, the effect of the wind on the flight when the case occurs is quantified in the form of the fluctuation range of the flight specification and the landing difficulty level, and hence it is possible to use the quantified effect of the wind in analysis of the cases of the accident and incident of the aircraft at the time of landing.

### [Industrial Applicability]

The present invention can be used in an air traffic control system, an aircraft flight control system, and on-board electronic equipment of an aircraft, and has industrial applicability.

## Claims

1. An aircraft flight information generation device for providing an estimation of a landing difficulty level wherein the aircraft flight information generation device is adapted to estimate the aircraft landing difficulty level at a runway by using data on wind directions and data on wind speeds at a plurality of predetermined altitudes on a landing path acquired by a weather sensor, data on bearing of the runway, and information on the model of the aircraft, as input information, comprising:
a data processing unit adapted to perform preprocessing on the data on wind directions and the data on wind speeds at the plurality of predetermined altitudes on the landing path acquired by the weather sensor and the data on bearing of the runway; and
a landing difficulty level estimation unit adapted to estimate the landing difficulty level with a first estimation model by using the information on the model of the aircraft and a fluctuation range of a flight specification of the aircraft at the plurality of predetermined altitudes outputted by the data processing unit, as the input information of the landing difficulty level estimation unit, wherein the flight specification comprises a vertical acceleration, a lateral acceleration, a roll angle and a pitch angle, and wherein
the first estimation model is constructed by a nonlinear multivariate analysis method by using past flight data of the aircraft, which has flown on the landing path as an estimation target and landed, and evaluation data obtained by subjective evaluation relative to the landing difficulty level by a pilot, as learning data,
the data processing unit has an aircraft response estimation unit,
the aircraft response estimation unit is adapted to estimate the fluctuation range of the flight specification of the aircraft at the plurality of predetermined altitudes with a third estimation model by using a fluctuation range of the head wind components, a fluctuation range of the cross wind components, and a fluctuation range of the vertical wind components at the plurality of predetermined altitudes being the output determined by a second estimation model, as the input information of the aircraft response estimation unit, the second estimation model using the data on wind directions and the data on wind speeds from the data preprocessing unit, and
the third estimation model is constructed by the nonlinear multivariate analysis method by using the past flight data of the aircraft, which has flown on the landing path as the estimation target and landed, as learning data.

2. The aircraft flight information generation device according to claim 1, wherein
the data processing unit has a wind disturbance estimation unit,
the wind disturbance estimation unit is adapted to estimate a fluctuation range of a head wind component, a fluctuation range of a cross wind component, and a fluctuation range of a vertical wind component of wind speeds at the plurality of predetermined altitudes with the second estimation model by using data acquired by performing the preprocessing on data on the wind directions and the data on wind speeds at the plurality of predetermined altitudes on the landing path acquired by the weather sensor and the data on bearing of the runway, as the input information, and
the second estimation model is constructed by the nonlinear multivariate analysis method by using the past flight data of the aircraft, which has flown on the landing path as the estimation target and landed, as the learning data.

3. The aircraft flight information generation device according to claim 2, wherein
the second estimation model is constructed by using a moving average value of time history information on the head wind component, the cross wind component, and the vertical wind component of the wind speed that the aircraft has received, calculated based on the past flight data of the aircraft, as an input value of the learning data.

4. The aircraft flight information generation device according to claim 2 or 3, wherein
the second estimation model is constructed by using a standard deviation around the moving average value of the time history information on the head wind component, the cross wind component, and the vertical wind component of the wind speed that the aircraft has received, calculated based on the past flight data of the aircraft, as an output value of the learning data.

5. The aircraft flight information generation device according to any one of claims 2 to 4, wherein
the wind disturbance estimation unit is adapted to estimate the head wind components of the wind speed and the cross wind components of the wind speed at the plurality of predetermined altitudes by performing coordinate transformation by using the data on wind directions and the data on wind speeds at the plurality of predetermined altitudes on the landing path acquired by the weather sensor and the data on bearing of the runway as the input information, calculates an altitude change rate of the head wind component and an altitude change rate of the cross wind component at the plurality of predetermined altitudes by performing numerical differentiation on each head wind component and each cross wind component in an altitude direction, and estimates the fluctuation range of the head wind component, the fluctuation range of the cross wind component, and the fluctuation range of the vertical wind component of the wind speed with the second estimation model by using the head wind component, the cross wind component, the altitude change rate of the head wind component, the altitude change rate of the cross wind component, and an altitude, as the input information.

6. The aircraft flight information generation device according to any one of claims 1 to 5, wherein
the third estimation model is constructed by using the standard deviation around the moving average value of fluctuation data of the aircraft, included in the past flight data of the aircraft, as the output value of the learning data.

7. An aircraft flight information generation method for generating aircraft flight information for providing an estimation of a landing difficulty level wherein the aircraft landing difficulty level at a runway is estimated by using data on wind directions and data on wind speeds at a plurality of predetermined altitudes on a landing path acquired by a weather sensor, data on bearing of the runway, and information on the model of the aircraft, as input information, the aircraft flight information generation method comprising:
preprocessing by a data processing unit on the data on wind directions and the data on wind speeds at the plurality of predetermined altitudes on the landing path acquired by the weather sensor and the data on bearing of the runway; and
estimating by a landing difficulty level estimation unit the landing difficulty level with a first estimation model by using the information on the model of the aircraft and a fluctuation range of a flight specification of the aircraft at the plurality of predetermined altitudes outputted by the data processing unit, as the input information to the landing difficulty level estimation unit, wherein the flight specification comprises vertical acceleration, a lateral acceleration, a roll angle and a pitch angle, and wherein
the first estimation model is constructed by a nonlinear multivariate analysis method by using past flight data of the aircraft, which has flown on the landing path as an estimation target and landed, and evaluation data obtained by subjective evaluation relative to the landing difficulty level by a pilot, as learning data
in the preprocessing, estimating by an aircraft response estimation unit the fluctuation range of the flight specification of the aircraft at the plurality of predetermined altitudes with a third estimation model by using the head wind components and the cross wind components on the landing path at the plurality of predetermined altitudes, and the fluctuation range of the head wind component, the fluctuation range of the cross wind component, and the fluctuation range of the vertical wind component at the plurality of predetermined altitudes being the output determined by a second estimation model, as the input information to the aircraft response estimation unit, and
the third estimation model is constructed by the nonlinear multivariate analysis method by using the past flight data of the aircraft, which has flown on the landing path as the estimation target and landed, as learning data.

8. An aircraft flight information generation program for implementing the method according to claim 7.

## Patentansprüche

1. Fluginformationsgenerierungsvorrichtung für Flugzeuge zur Bereitstellung einer Schätzung eines Landeschwierigkeitsgrads, wobei die Fluginformationsgenerierungsvorrichtung für Flugzeuge in der Lage ist, den Landeschwierigkeitsgrad für eine Landebahn zu schätzen, indem sie Daten über die Windrichtung und Daten über die Windgeschwindigkeit in mehreren vorbestimmten Höhen auf einer Landestrecke, welche von einem Wettersensor erfasst werden, Daten über die Peilung der Landebahn, und Informationen über das Flugzeugmodell als Eingabeinformationen verwendet, mit:
einer Datenverarbeitungseinheit, welche in der Lage ist, eine Vorverarbeitung der Daten über die Windrichtung und der Daten über die Windgeschwindigkeit in mehreren vorbestimmten Höhen auf einer Landestrecke, welche von einem Wettersensor erfasst werden, und der Daten über die Peilung der Landebahn durchzuführen; und
einer Landeschwierigkeitsgradschätzeinheit, die in der Lage ist, den Landeschwierigkeitsgrad mit einem ersten Schätzungsmodell zu schätzen, indem sie die Informationen über das Flugzeugmodell und einen Fluktuationsbereich einer Flugspezifikation des Flugzeugs in den mehreren vorbestimmten Höhen, welche von der Datenverarbeitungseinheit ausgegeben werden, als die Eingabeinformation der Landeschwierigkeitsgradschätzeinheit verwendet, wobei die Flugspezifikation eine vertikale Beschleunigung, eine seitliche Beschleunigung, einen Rollwinkel und einen Neigungswinkel aufweist, und wobei
das erste Schätzungsmodell mittels eines non-linearen multivariaten Analyseverfahrens erstellt wird, indem vorherige Flugdaten des Flugzeugs, welches auf der Landestrecke als Schätzungsziel geflogen ist und gelandet ist, und Auswertungsdaten, welche durch subjektive Auswertung des Landeschwierigkeitsgrads durch einen Piloten erhalten werden, als Lerndaten verwendet werden,
die Datenverarbeitungseinheit eine Flugzeugreaktionsschätzeinheit aufweist,
die Flugzeugreaktionsschätzeinheit in der Lage ist, den Fluktuationsbereich der Flugspezifikation des Flugzeugs in den mehreren vorbestimmten Höhen mit einem dritten Schätzungsmodell zu schätzen, indem sie einen Fluktuationsbereich der Gegenwindkomponenten, einen Fluktuationsbereich der Seitenwindkomponenten, und einen Fluktuationsbereich der vertikalen Windkomponenten in den mehreren vorbestimmten Höhen, welche die durch ein zweites Schätzungsmodell bestimmte Ausgabe sind, als die Eingabeinformation der Flugzeugreaktionsschätzeinheit verwendet werden, wobei das zweite Schätzungsmodell die Daten über die Windrichtungen und die Daten über die Windgeschwindigkeiten von der Vorverarbeitungseinheit verwendet, und
das dritte Schätzungsmodell mittels des non-linearen multivariaten Analyseverfahrens erstellt wird, indem die vorherigen Flugdaten des Flugzeugs, welches auf der Landestrecke als Schätzungsziel geflogen ist und gelandet ist, als Lerndaten verwendet werden.

2. Fluginformationsgenerierungsvorrichtung für Flugzeuge nach Anspruch 1, bei welcher
die Datenverarbeitungseinheit eine Windturbulenzschätzeinheit aufweist,
die Windturbulenzschätzeinheit in der Lage ist, einen Fluktuationsbereich einer Gegenwindkomponente, einen Fluktuationsbereich einer Seitenwindkomponente, und einen Fluktuationsbereich einer vertikalen Windkomponente von Windgeschwindigkeiten in den mehreren vorbestimmten Höhen mit dem zweiten Schätzungsmodell zu schätzen, indem Daten, welche durch
das Vorverarbeiten von Daten über die Windrichtungen und Daten über die Windgeschwindigkeiten in den mehreren vorbestimmten Höhen auf der Landestrecke, welche von dem Wettersensor erfasst wurden, und Daten über die Peilung der Landebahn als Eingabeinformation verwendet werden, und
das zweite Schätzungsmodell mittels des non-linearen multivariaten Analyseverfahrens erstellt wird, indem die vorherigen Flugdaten des Flugzeugs, welches auf der Landestrecke als Schätzungsziel geflogen ist und gelandet ist, als Lerndaten verwendet werden.

3. Fluginformationsgenerierungsvorrichtung für Flugzeuge nach Anspruch 2, bei welcher
das zweite Schätzungsmodell erstellt wird, indem ein basierend auf den vorherigen Flugdaten des Flugzeugs berechneter gleitender Mittelwert von Zeitverlaufsinformationen über die Gegenwindkomponente, die Seitenwindkomponente, und die vertikale Windkomponente der Windgeschwindigkeit, welche das Flugzeug empfangen hat, als ein Eingabewert der Lerndaten verwendet wird.

4. Fluginformationsgenerierungsvorrichtung für Flugzeuge nach Anspruch 2 oder 3, bei welcher
das zweite Schätzungsmodell erstellt wird, indem eine Standardabweichung um den basierend auf den vorherigen Flugdaten des Flugzeugs berechneten gleitenden Mittelwert der Zeitverlaufsinformationen über die Gegenwindkomponente, die Seitenwindkomponente, und die vertikale Windkomponente der Windgeschwindigkeit, welche das Flugzeug empfangen hat, als ein Ausgangswert der Lerndaten verwendet wird.

5. Fluginformationsgenerierungsvorrichtung für Flugzeuge nach einem der Ansprüche 2 bis 4, bei welcher
die Windturbulenzschätzeinheit in der Lage ist, die Gegenwindkomponenten der Windgeschwindigkeit und die Seitenwindkomponenten der Windgeschwindigkeit in den mehreren vorbestimmten Höhen durch das Durchführen einer Koordinatentransformation zu schätzen, indem sie die Daten über Windrichtungen und die Daten über Windgeschwindigkeiten in den mehreren vorbestimmten Höhen auf der Landestrecke, welche von dem Wettersensor erfasst wurden, und die Daten über die Peilung der Landebahn als die Eingabeinformationen verwendet, eine Höhenänderungsrate der Gegenwindkomponente und eine Höhenänderungsrate der Seitenwindkomponente in den mehreren vorbestimmten Höhen durch das Durchführen einer numerischen Differenzierung jeder Gegenwindkomponente und jeder Seitenwindkomponente in einer Höhenrichtung berechnet, und den Fluktuationsbereich der Gegenwindkomponente, den Fluktuationsbereich der Seitenwindkomponente, und den Fluktuationsbereich der vertikalen Windkomponente der Windgeschwindigkeit mit dem zweiten Schätzungsmodell schätzt, indem die Gegenwindkomponente, die Seitenwindkomponente, die Höhenänderungsrate der Gegenwindkomponente, und die Höhenänderungsrate der Seitenwindkomponente, und eine Höhe als die Eingabeinformationen verwendet werden.

6. Fluginformationsgenerierungsvorrichtung für Flugzeuge nach einem der Ansprüche 1 bis 5, bei welcher
das dritte Schätzungsmodell erstellt wird, indem die Standardabweichung um den gleitenden Mittelwert von Fluktuationsdaten des Flugzeugs, die in den vorherigen Flugdaten des Flugzeugs enthalten sind, als der Ausgabewert der Lerndaten verwendet wird.

7. Fluginformationsgenerierungsverfahren für Flugzeuge zum Erzeugen von Flugzeug-Fluginformationen zur Bereitstellung einer Schätzung eines Landeschwierigkeitsgrads, wobei der Landeschwierigkeitsgrad für eine Landebahn geschätzt wird, indem Daten über Windrichtungen und Daten über Windgeschwindigkeiten in mehreren vorbestimmten Höhen auf einer Landestrecke, welche von einem Wettersensor erfasst werden, Daten über die Peilung der Landebahn, und Informationen über das Flugzeugmodell als Eingabeinformationen verwendet werden, wobei das Fluginformationsgenerierungsverfahren für Flugzeuge die folgenden Schritte aufweist:
Vorverarbeiten, mittels einer Datenverarbeitungseinheit, der Daten über die Windrichtungen und der Daten über die Windgeschwindigkeiten in den mehreren vorbestimmten Höhen auf einer Landestrecke, welche von einem Wettersensor erfasst werden, und der Daten über die Peilung der Landebahn; und
Schätzen, mittels einer Landeschwierigkeitsgradschätzeinheit, des Landeschwierigkeitsgrads mit einem ersten Schätzungsmodell, indem die Informationen über das Flugzeugmodell und ein Fluktuationsbereich einer Flugspezifikation des Flugzeugs in den mehreren vorbestimmten Höhen, welche von der Datenverarbeitungseinheit ausgegeben werden, als die Eingabeinformation für die Landeschwierigkeitsgradschätzeinheit verwendet werden, wobei die Flugspezifikation eine vertikale Beschleunigung, eine seitliche Beschleunigung, einen Rollwinkel und einen Neigungswinkel aufweist, und wobei
das erste Schätzungsmodell mittels eines non-linearen multivariaten Analyseverfahrens erstellt wird, indem vorherige Flugdaten des Flugzeugs, welches auf der Landestrecke als Schätzungsziel geflogen ist und gelandet ist, und Auswertungsdaten, welche durch subjektive Auswertung des Landeschwierigkeitsgrads durch einen Piloten erhalten werden, als Lerndaten verwendet werden,
bei der Vorverarbeitung, Schätzen, mittels einer Flugzeugreaktionsschätzeinheit, des Fluktuationsbereichs der Flugspezifikation des Flugzeugs in den mehreren vorbestimmten Höhen mit einem dritten Schätzungsmodell, indem die Gegenwindkomponenten und die Seitenwindkomponenten auf der Landestrecke in den mehreren vorbestimmten Höhen, und der Fluktuationsbereich der Gegenwindkomponente, der Fluktuationsbereich der Seitenwindkomponente, und der Fluktuationsbereich der vertikalen Windkomponente in den mehreren vorbestimmten Höhen, welche die durch ein zweites Schätzungsmodell bestimmte Ausgabe sind, als die Eingabeinformation für die Flugzeugreaktionsschätzeinheit verwendet werden, und
das dritte Schätzungsmodell mittels des non-linearen multivariaten Analyseverfahrens erstellt wird, indem die vorherigen Flugdaten des Flugzeugs, welches auf der Landestrecke als Schätzungsziel geflogen ist und gelandet ist, als Lerndaten verwendet werden.

8. Flugzeuginformationsgenerierungsprogramm für Flugzeuge zum Implementieren des Verfahrens nach Anspruch 7.

## Revendications

1. Dispositif de génération d'informations de vol d'aéronef permettant de fournir une estimation d'un niveau de difficulté d'atterrissage dans lequel
le dispositif de génération d'informations de vol d'aéronef est adapté pour estimer le niveau de difficulté d'atterrissage d'aéronef sur une piste à l'aide des données de directions de vent et des données de vitesses du vent à une pluralité d'altitudes prédéterminées au-dessus d'une trajectoire d'atterrissage obtenues grâce à un capteur météorologique, des données de relèvement de piste, et des informations sur le modèle de l'aéronef, en tant qu'informations d'entrée, comprenant :
une unité de traitement de données adaptée pour effectuer un prétraitement sur les données de directions du vent et les données de vitesses du vent à la pluralité d'altitudes prédéterminées au-dessus de la trajectoire d'atterrissage obtenues grâce au capteur météorologique et les données de relèvement de la piste ; et
une unité d'estimation de niveau de difficulté d'atterrissage adaptée pour estimer le niveau de difficulté d'atterrissage avec un premier modèle d'estimation à l'aide des informations sur le modèle de l'aéronef et une plage de fluctuation d'une spécification de vol de l'aéronef à la pluralité d'altitudes prédéterminées délivrées par l'unité de traitement de données, en tant qu'informations d'entrée de l'unité d'estimation de niveau de difficulté d'atterrissage,
dans lequel la spécification de vol comprend une accélération verticale, une accélération latérale, un angle d'inclinaison latérale et un angle d'inclinaison longitudinale, et dans lequel
le premier modèle d'estimation est construit par une méthode d'analyse multivariée et non linéaire à l'aide des données de vol antérieures de l'aéronef, qui a survolé la trajectoire d'atterrissage en tant que cible d'estimation et a atterri, et des données d'évaluation obtenues par évaluation subjective par rapport au niveau de difficulté d'atterrissage par un pilote, en tant que données d'apprentissage,
l'unité de traitement de données a une unité d'estimation de réponse d'aéronef,
l'unité d'estimation de réponse d'aéronef est adaptée pour estimer la plage de fluctuation de la spécification de vol de l'aéronef à la pluralité d'altitudes prédéterminées avec un troisième modèle d'estimation à l'aide d'une plage de fluctuation des composantes de vent de face, d'une plage de fluctuation des composantes de vent latéral, et d'une plage de fluctuation des composantes de vent vertical au niveau de la pluralité d'altitudes prédéterminées qui est la sortie déterminée par un deuxième modèle d'estimation, en tant qu'informations d'entrée de l'unité d'estimation de réponse d'aéronef, le deuxième modèle d'estimation utilisant les données de directions de vent et les données de vitesses de vent de l'unité de prétraitement de données, et
le troisième modèle d'estimation est construit par le procédé d'analyse multivariée et non linéaire à l'aide des données de vol antérieures de l'aéronef, qui a survolé la trajectoire d'atterrissage en tant que cible d'estimation et a atterri, en tant que données d'apprentissage.

2. Dispositif de génération d'informations de vol d'aéronef selon la revendication 1, dans lequel
l'unité de traitement de données a une unité d'estimation de perturbation de vent,
l'unité d'estimation de perturbation du vent est adaptée pour estimer une plage de fluctuation d'une composante de vent de face, une plage de fluctuation d'une composante de vent latéral, et une plage de fluctuation d'une composante de vent vertical des vitesses du vent au niveau de la pluralité d'altitudes prédéterminées avec le deuxième modèle d'estimation à l'aide des données obtenues en effectuant le prétraitement sur des données de directions de vent et des données de vitesses de vent à la pluralité d'altitudes prédéterminées au-dessus de la trajectoire d'atterrissage obtenues grâce au capteur météorologique et des données de relèvement de la piste, en tant qu'informations d'entrée, et
le deuxième modèle d'estimation est construit par le procédé d'analyse multivariée et non linéaire à l'aide des données de vol antérieures de l'aéronef, qui a survolé la trajectoire d'atterrissage en tant que cible d'estimation et a atterri, en tant que données d'apprentissage.

3. Dispositif de génération d'informations de vol d'aéronef selon la revendication 2, dans lequel
le deuxième modèle d'estimation est construit à l'aide d'une valeur moyenne mobile d'informations historiques temporelles sur la composante de vent de face, la composante de vent latéral et la composante de vent vertical de la vitesse du vent que l'aéronef a reçu, calculée sur la base des données de vol antérieures de l'aéronef, en tant que valeur d'entrée des données d'apprentissage.

4. Dispositif de génération d'informations de vol d'aéronef selon la revendication 2 ou 3, dans lequel
le deuxième modèle d'estimation est construit à l'aide d'un écart-type autour de la valeur moyenne mobile des informations historiques temporelles sur la composante de vent de face, la composante de vent latéral et la composante de vent vertical de la vitesse du vent que l'aéronef a reçu, calculée sur la base des données de vol antérieures de l'aéronef, en tant que valeur de sortie des données d'apprentissage.

5. Dispositif de génération d'informations de vol d'aéronef selon l'une quelconque des revendications 2 à 4, dans lequel
l'unité d'estimation de perturbation du vent est adaptée pour estimer les composantes du vent de face de la vitesse du vent et les composantes du vent latéral de la vitesse du vent au niveau de la pluralité d'altitudes prédéterminées en effectuant une transformation de coordonnées à l'aide des données de directions du vent et des données de vitesses du vent au niveau de la pluralité d'altitudes prédéterminées au-dessus de la trajectoire d'atterrissage obtenues grâce au capteur météorologique et des données de relèvement de la piste en tant qu'informations d'entrée, calcule un taux de changement d'altitude de la composante de vent de face et un taux de changement d'altitude de la composante de vent latéral au niveau de la pluralité d'altitudes prédéterminées en effectuant une différentiation numérique sur chaque composante de vent de face et chaque composante de vent latéral dans une direction d'altitude, et estime la plage de fluctuation de la composante de vent de face, la plage de fluctuation de la composante de vent latéral, la plage de fluctuation de la composante de vent vertical de la vitesse du vent avec le second modèle d'estimation à l'aide de la composante de vent de face, la composante de vent latéral, le taux de changement d'altitude de la composante de vent de face, le taux de changement d'altitude de la composante de vent latéral, et une altitude, en tant qu'informations d'entrée.

6. Dispositif de génération d'informations de vol d'aéronef selon l'une quelconque des revendications 1 à 5, dans lequel
le troisième modèle d'estimation est construit à l'aide de l'écart-type autour de la valeur moyenne mobile de données de fluctuation de l'aéronef, inclues dans les données de vol antérieures de l'aéronef, en tant que valeur de sortie des données d'apprentissage.

7. Procédé de génération d'informations de vol d'aéronef pour la génération d'informations de vol d'aéronef afin de fournir une estimation d'un niveau de difficulté d'atterrissage dans lequel le niveau de difficulté d'atterrissage d'aéronef sur une piste est estimé à l'aide de données de directions de vent et de données de vitesses de vent à une pluralité d'altitudes prédéterminées au-dessus d'une trajectoire d'atterrissage obtenues grâce à un capteur météorologique, de données de relèvement de la piste, et d'informations sur le modèle de l'aéronef, en tant qu'informations d'entrée, le procédé de génération d'informations de vol d'aéronef comprenant :
le prétraitement par une unité de traitement de données sur les données de directions du vent et les données de vitesses du vent à la pluralité d'altitudes prédéterminées au-dessus de la trajectoire d'atterrissage obtenues grâce au capteur météorologique et les données de relèvement de la piste ; et
l'estimation, par une unité d'estimation de niveau de difficulté d'atterrissage, du niveau de difficulté d'atterrissage avec un premier modèle d'estimation à l'aide des informations sur le modèle de l'aéronef et une plage de fluctuation d'une spécification de vol de l'aéronef à la pluralité d'altitudes prédéterminées délivrées par l'unité de traitement de données, en tant qu'informations d'entrée, à l'unité d'estimation du niveau de difficulté d'atterrissage,
dans lequel la spécification de vol comprend une accélération verticale, une accélération latérale, un angle d'inclinaison latérale et un angle d'inclinaison longitudinale, et dans lequel
le premier modèle d'estimation est construit par une méthode d'analyse multivariée et non linéaire à l'aide des données de vol antérieures de l'aéronef, qui a survolé la trajectoire d'atterrissage en tant que cible d'estimation et a atterri, et des données d'évaluation obtenues par évaluation subjective par rapport au niveau de difficulté d'atterrissage par un pilote, en tant que données d'apprentissage
dans le prétraitement, l'estimation par une unité d'estimation de réponse d'aéronef de la plage de fluctuation de la spécification de vol de l'aéronef au niveau de la pluralité d'altitudes prédéterminées avec un troisième modèle d'estimation à l'aide des composantes de vent de face et des composantes de vent latéral au-dessus de la trajectoire d'atterrissage à la pluralité d'altitudes prédéterminées, et la plage de fluctuation de la composante de vent de face, la plage de fluctuation de la composante de vent latéral, et la plage de fluctuation de la composante de vent vertical à la pluralité d'altitudes prédéterminées étant la sortie déterminée par un deuxième modèle d'estimation, en tant qu'informations d'entrée, à l'unité d'estimation de réponse d'aéronef, et
le troisième modèle d'estimation est construit par le procédé d'analyse multivariée et non linéaire à l'aide des données de vol antérieures de l'aéronef, qui a survolé la trajectoire d'atterrissage en tant que cible d'estimation et a atterri, en tant que données d'apprentissage.

8. Programme de génération d'informations de vol d'aéronef pour la mise en oeuvre du procédé selon la revendication 7.
